# FASCICULE DE BREVET EUROPEEN

(11) **EP 4 453 896 B1**
(45) Date de publication et mention de la délivrance du brevet: **25.11.2026**
(21) Numéro de dépôt: 22854158.7
(22) Date de dépôt: 23.12.2022
(51) Int. Cl.: G06V 10/40, G06V 40/16, G06V 10/82

(54) **DISPOSITIF ET PROCÉDÉ DE TRAITEMENT DE DONNÉES D'IMAGES DE VISAGES D'ÊTRES HUMAINS**
VORRICHTUNG UND VERFAHREN ZUR VERARBEITUNG VON BILDDATEN EINES MENSCHLICHEN GESICHTS
DEVICE AND METHOD FOR HUMAN FACES IMAGES DATA PROCESSING

(30) Priorité: 24.12.2021 FR 2114494
(43) Date de publication de la demande: 30.10.2024
(73) Titulaire: Unissey, 75012 Paris (FR)
(72) Inventeur: FENG, Sheng, 77420 Champs sur Marne (FR)
(74) Mandataire: Cabinet Netter
(86) Numéro de dépôt international: PCT/FR2022/052496
(87) Numéro de publication internationale: WO 2023/118768

(56) Documents cités:
- WO-A1-2021/139309
- DENG JIANKANG ET AL: "ArcFace: Additive Angular Margin Loss for Deep Face Recognition EPSRC FACER2VM View project Unsupervised Multilinear Tensor Decomposition View project ArcFace: Additive Angular Margin Loss for Deep Face Recognition", 9 February 2019 (2019-02-09), XP055977364, Retrieved from the Internet <URL:https://www.researchgate.net/publication/322674945_ArcFace_Additive_Angular_Margin_Loss_for_Deep_Face_Recognition> [retrieved on 20221102]

## Description

L'invention concerne le domaine du traitement d'images, et en particulier du traitement d'images de visages d'êtres humains.

Les outils à base d'intelligence artificielle sont de plus en plus utilisés pour tout ce qui concerne la reconnaissance d'images. Cela se constate autant dans le domaine de l'imagerie médicale que dans le domaine de la détection de présence humaine ou de la reconnaissance faciale.

Le développement de ces outils a suivi deux axes principaux.

Le premier axe concerne la création de réseaux de neurones profonds, à travers la création de familles de modèles, tels que ResNet, DenseNet, MobileNet, ResNeXt, etc. Ces familles de modèles apportent chacune leur lot de progrès et de compromis et ont pour principal point commun d'extraire des caractéristiques d'images reçues en entrée. Ces caractéristiques sont ensuite utilisées par des réseaux de neurones classiques, souvent à couches entières, qui ont pour rôle la classification des images.

Le deuxième axe est l'enrichissement des bases d'images d'entraînement. En effet, les capacités de calcul permettent d'entraîner des réseaux de neurones profonds avec des quantités de données toujours plus importantes. Mais cela pose plusieurs problèmes. En effet, les temps d'entraînement étant très importants, il est courant d'utiliser un réseau pré-entraîné, ou avec une base de données d'entraînement déjà connue, afin de pouvoir réutiliser des poids ou variables de modèle d'une manière minimisant le risque de perte de temps à l'entraînement (par risque de non convergence ou de résultat insatisfaisant). Dit autrement, les bases d'entraînement sont plus grandes, pour fournir de meilleurs résultats, mais il est difficile de les changer. Cela veut dire qu'on utilise une même base pour tout faire, et qu'on cherche à compenser l'absence de spécialisation en aval.

Cette spécialisation peut être utile pour mieux identifier des visages par exemple, ou pour mieux distinguer entre des images médicales.

Des efforts ont donc été réalisés afin d'essayer d'utiliser plusieurs corps d'entraînement distincts afin de spécialiser les réseaux de neurones profonds sur des problèmes particuliers, par fusion des corps communs et spécialisés. Mais alors se pose le problème de la représentation quantitative de chaque corps. En effet, lorsqu'un corps spécialisé contenant 1000 fois moins de données que le corps commun est utilisé avec celui-ci pour entraîner un réseau de neurones, ce corps spécialisé n'a presque aucun effet sur l'entraînement. Inversement, si l'on entraîne d'abord avec le corps commun, puis que l'on spécialise en réalisant un réglage fin sur le corps spécialisé, le risque encouru est une surspécialisation du réseau de neurones sur le corps spécialisé. Le document d'art antérieur WO 2021/139309 A1 (PING AN TECH SHENZHEN CO LTD [CN]) 15 juillet 2021 traite du calcul de la valeur moyenne de la fonction de perte dans un modèle de reconnaissance faciale, en utilisant plusieurs ensembles de données.

Il n'existe donc pas à ce jour de solution satisfaisant pour fournir un dispositif de traitement d'image d'êtres humains qui puisse tenir compte de caractéristiques spécifiques.

L'invention vient améliorer la situation. À cet effet, elle propose un dispositif de traitement de données d'images de visages d'êtres humains comprenant un extracteur agencé pour recevoir des données d'image et pour en extraire un jeu de caractéristiques, et deux ou plus de deux classificateurs agencés pour recevoir un jeu de caractéristiques de l'extracteur et pour retourner une valeur de classification ou de labellisation des données d'image correspondantes, dans lequel l'extracteur est un réseau de neurones profond et les deux ou plus de deux classificateurs comprennent un unique réseau de neurones commun et un ou des réseaux de neurones spécifiques à des sous-ensembles d'images de visages d'êtres humains, les sous-ensembles d'images de visages d'êtres humains comprenant au moins un sous-ensemble commun d'images de visages d'êtres humains, et un ou plusieurs sous-ensembles spécifiques d'images de visages d'êtres humains tels que les données d'images de visages d'êtres humains d'un sous-ensemble spécifique d'images de visages d'êtres humains présentent individuellement ou ensemble une caractéristique d'être humain commune et tels que deux sous-ensembles spécifiques distincts ne présentent pas un nombre d'images identiques supérieur à 50%, et le sous-ensemble commun comprenant un nombre d'images au moins 100 fois supérieur aux nombres d'images des sous-ensembles spécifiques, l'entraînement de l'extracteur et des deux ou plus de deux classificateurs est réalisé :
a) en entraînant l'extracteur et un premier des classificateurs ensemble en utilisant le sous-ensemble commun d'images de visages d'êtres humains,
b) en bloquant l'entraînement de l'extracteur et en entraînant un autre classificateur avec un premier sous-ensemble spécifique,
c) en répétant l'opération b) à chaque fois avec un autre classificateur et avec un sous-ensemble spécifique distinct, jusqu'à ce que tous les sous-ensembles spécifiques distincts aient être utilisés pour entraîner un classificateur,
d) en réalisant une opération d'entraînement avec rétropropagation comprenant
d1) définir un jeu de données mixte comprenant des données d'images issues du sous-ensemble commun et de chacun des sous-ensembles spécifiques,
d2) exécuter l'extracteur avec le jeu de données mixte, et classer les jeux de caractéristiques résultants en sous-ensembles de jeux de caractéristique selon le sous-ensemble dont sont issues les données d'images dans le jeu de données mixte,
d3) exécuter chaque classificateur avec le sous-ensemble de jeux de caractéristiques correspondant au sous-ensemble qui a servi à l'entraînement de ce classificateur à l'opération a), b) ou c),
d4) calculer pour chaque classificateur une valeur de perte à partir des valeur de classification ou de labellisation issues de l'opérateur d3), et
d5) réaliser rétropropagation à partir d'une moyenne pondérée des valeurs de perte de l'opération d4).

Ce dispositif est particulièrement avantageux car il permet, par un apprentissage spécifique, de fournir un dispositif qui utilise toute la puissance des bases d'entraînement généralistes tout en permettant de l'adapter à la détection de caractéristiques spécifiques.

Selon divers modes de réalisation, l'invention peut présenter une ou plusieurs des caractéristiques suivantes :
- l'extracteur est un réseau de neurones profond adapté à l'extraction de caractéristiques d'images, comme un réseau de la famille ResNet, ou un réseau de la famille DenseNet, MobileNet, ResNeXt,
- l'extracteur est un réseau de neurones profond ResNet-101,
- les classificateurs sont du type ArcFace,
- le dispositif comprend un sous-ensemble spécifique d'images de visages d'êtres humains présentant une grande variété d'âges, et
- le dispositif comprend un sous-ensemble spécifique d'images de visages d'êtres humains présentant une grande variété de maquillages.

L'invention concerne également un procédé d'entraînement d'un dispositif de traitement de données d'images de visages d'êtres humains comprenant un extracteur agencé pour recevoir des données d'image et pour en extraire un jeu de caractéristiques, et deux ou plus de deux classificateurs agencés pour recevoir un jeu de caractéristiques de l'extracteur et pour retourner une valeur de classification ou de labellisation des données d'image correspondantes, dans lequel l'extracteur est un réseau de neurones profond et les deux ou plus de deux classificateurs comprennent un unique réseau de neurones commun et un ou des réseaux de neurones spécifiques à des sous-ensembles d'images de visages d'êtres humains, les sous-ensembles d'images de visages d'êtres humains comprenant au moins un sous-ensemble commun d'images de visages d'êtres humains, et un ou plusieurs sous-ensembles spécifiques d'images de visages d'êtres humains tels que les données d'images de visages d'êtres humains d'un sous-ensemble spécifique d'images de visages d'êtres humains présentent individuellement ou ensemble une caractéristique d'être humain commune et tels que deux sous-ensembles spécifiques distincts ne présentent pas un nombre d'images identiques supérieur à 50%, et le sous-ensemble commun comprenant un nombre d'images au moins 100 fois supérieur aux nombres d'images des sous-ensembles spécifiques, dans lequel l'entraînement de l'extracteur et des deux ou plus de deux classificateurs est réalisé :
a) en entraînant l'extracteur et un premier des classificateurs ensemble en utilisant le sous-ensemble commun d'images de visages d'êtres humains,
b) en bloquant l'entraînement de l'extracteur et en entraînant un autre classificateur avec un premier sous-ensemble spécifique,
c) en répétant l'opération b) à chaque fois avec un autre classificateur et avec un sous-ensemble spécifique distinct, jusqu'à ce que tous les sous-ensembles spécifiques distincts aient être utilisés pour entraîner un classificateur,
d) en réalisant une opération d'entraînement avec rétropropagation comprenant
d1) définir un jeu de données mixte comprenant des données d'images issues du sous-ensemble commun et de chacun des sous-ensembles spécifiques,
d2) exécuter l'extracteur avec le jeu de données mixte, et classer les jeux de caractéristiques résultants en sous-ensembles de jeux de caractéristique selon le sous-ensemble dont sont issues les données d'images dans le jeu de données mixte,
d3) exécuter chaque classificateur avec le sous-ensemble de jeux de caractéristiques correspondant au sous-ensemble qui a servi à l'entraînement de ce classificateur à l'opération a), b) ou c),
d4) calculer pour chaque classificateur une valeur de perte à partir des valeur de classification ou de labellisation issues de l'opérateur d3), et
d5) réaliser rétropropagation à partir d'une moyenne pondérée des valeurs de perte de l'opération d4).

D'autres caractéristiques et avantages de l'invention apparaîtront mieux à la lecture de la description qui suit, tirée d'exemples donnés à titre illustratif et non limitatif, tirés des dessins sur lesquels :
- [Fig.1] représente un schéma générique d'un dispositif selon l'invention,
- [Fig.2] représente un exemple de mise en œuvre de l'extracteur de la figure 1,
- [Fig.3] représente un exemple de mise en œuvre d'un classificateur de la figure 1, et
- [Fig.4] représente un exemple de mise en œuvre d'un entraînement du dispositif de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

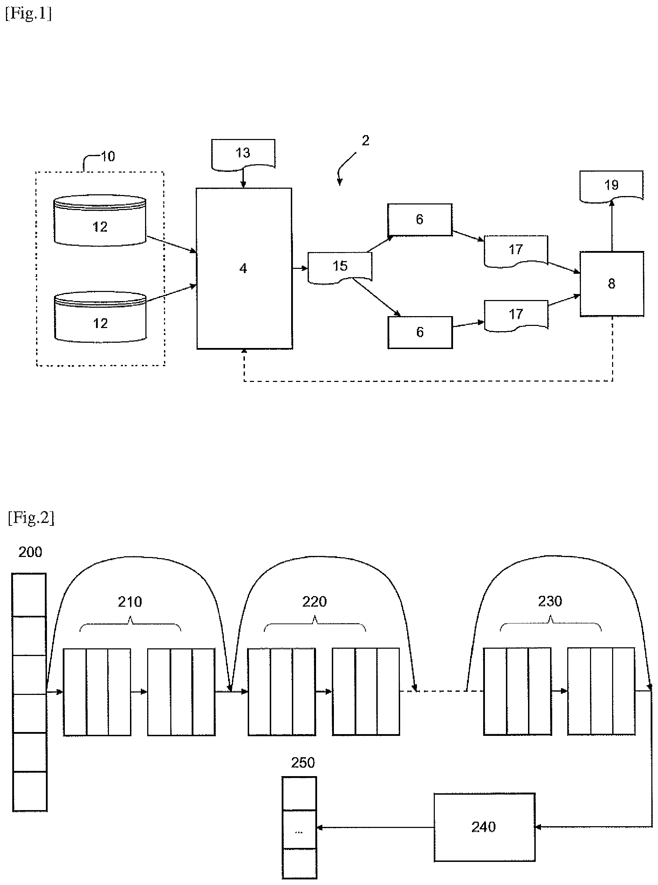

La figure 1 représente d'un schéma générique d'un dispositif de traitement d'images 2 selon l'invention.

Dans l'exemple décrit ici, les images sont des images dont l'information utile est formée par des visages, et le dispositif 2 peut être utilisé pour faire de la reconnaissance faciale. En variante, les images pourraient être des images obtenues par imagerie, par exemple par CT, scan, ou IRM, ou être des photos d'une partie d'un corps humain, par exemple incluant un grain de beauté.

Comme on le verra plus bas, le dispositif 2 permet d'entraîner plusieurs réseaux de neurones capables d'être à la fois généralistes et spécialisés. D'une manière générale, il est important que les images servant à réaliser l'entraînement ces réseaux de neurones soient cohérentes entre elles, c'est-à-dire qu'elles aient une partie utile significative en commun. Ainsi, si les images sont des visages, certaines pourront contenir le cou, les cheveux, et un environnement. Mais la très grande majorité devra être cadrée ou retravailler pour représenter majoritairement un visage et pas plusieurs ou une partie trop importante du reste du corps.

Dans l'exemple décrit ici, le dispositif 2 comprend un extracteur 4, trois classificateurs 6, et un unificateur 8. Comme expliqué plus haut, le but est d'offrir un dispositif 2 avec d'excellentes capacités généralistes, mais également des capacités spécialisées. Pour cette raison, parmi les classificateurs 6, un est généraliste, et un est spécialisé. D'une manière générale, un dispositif 2 selon l'invention comportera toujours au moins deux classificateurs : un généraliste et au moins un spécialisé. Dans le cas de K classificateurs, il y a aura un classificateur généraliste, et (K-1) spécialisés.

Pour entraîner ces classificateurs, une mémoire 10 reçoit autant de bases de données 12 qu'il y a de classificateurs 6. Ce sont ces bases de données 12 qui vont permettre, par leur contenu spécifique, de spécialiser certains des classificateurs. Ainsi, s'il y a K classificateurs 6, alors il y a K bases de données 12, dont une est dite généraliste et contiendra en général une énorme quantité d'images, et (K-1) sont spécifiques avec une quantité d'images très inférieure à celle de la base de données généraliste.

Dans l'exemple décrit ici, la base de données généraliste pourra être la base Glint360k (par exemple accessible à l'adresse https://web.archive.org/web/20201120191720/https://github.com/deepinsight/insightfac e/tree/master/recognition/partial_fc#Glint360k) contient près de 17 millions d'images de visages.

Dans l'exemple décrit ici, une des bases de données spécialisée est la base de données AgeDB (par exemple accessible à l'adresse https://ibug.doc.ic.ac.uk/resources/agedb/), qui contient 16488 images.

Plus bas un exemple permettant de montrer les avantages du dispositif 2 utilisera la base de données CALFW (par exemple accessible à l'adresse https://web.archive.org/web/20210923094739/http://www.whdeng.cn/CALFW), qui contient environ 6000 paires d'images.

Un élément important des bases de données spécifiques est que les images qu'elles contiennent présentent toutes un critère d'être humain commun, et ce critère peut être propre à chaque image ou défini par plusieurs images de la base de données spécifique ensemble. Par exemple, une base de données pourrait être spécialisée en dermatologie sur des grains de beauté malins pour certains couleurs de peau. Dans le cas de la base AgeDB, les images définissent ensemble une représentation homogène d'âge permettant de mieux distinguer entre des visages d'âges distincts, , etc. En variante, des bases spécifiques pourraient être utilisées pour spécialiser la détection sur des visages plus ou moins maquillés, sur certains types d'ethnies, etc.

La mémoire 10 peut être tout type de stockage de données propre à recevoir des données numériques : disque dur, disque dur à mémoire flash, mémoire flash sous toute forme, mémoire vive, disque magnétique, stockage distribué localement ou dans le cloud, etc. Les données calculées par le dispositif peuvent être stockées sur tout type de mémoire similaire à la mémoire 10, ou sur celle-ci. Ces données peuvent être effacées après que le dispositif a effectué ses tâches ou conservées.

Les bases de données 12 peuvent être de tout type, y compris être un répertoire ou plusieurs d'images, et leur structure peut être explicite ou implicite, par exemple basée sur les noms et/ou chemins d'accès des fichiers.

Dans l'exemple décrit ici, l'extracteur 4 est un réseau de neurones profond du type ResNet-101. Le rôle de l'extracteur 4 est de recevoir une image d'entrée 13, et d'en tirer un jeu de caractéristiques 15. Ce jeu de caractéristiques 15 est ensuite envoyé aux classificateurs 6 qui déterminent chacun une valeur de réponse 17, qui est envoyée à l'unificateur 8 qui calcule une valeur de sortie 19 à partir des valeurs de réponse 17.

Dans l'exemple décrit ici, la résolution des images en entrée, que ce soit pour l'entraînement ou le traitement, est fixée (par sélection ou redimensionnement) à 112*112*3, et les jeux de caractéristiques 15 est un vecteur de 512 éléments.

En variante, l'extracteur 4 pourrait être tout type de réseau de neurones profond adapté à l'extraction de caractéristiques d'images, comme un autre réseau de la famille ResNet, ou un réseau de la famille DenseNet, MobileNet, ResNeXt, etc

Dans l'exemple décrit ici, les classificateurs 6 sont des réseaux de neurones ArcFace, décrits dans l'article de J. Deng, J. Guo, N. Xue and S. Zafeiriou, "ArcFace: Additive Angular Margin Loss for Deep Face Recognition" 2019 IEEE/CVF Conference on Computer Vision and Pattern Recognition (CVPR), 2019, pp. 4685-4694, doi: 10.1109/CVPR.2019.00482

L'unificateur 8 joue un double rôle.

Dans l'utilisation « runtime » du dispositif 2, l'unificateur 8 reçoit les sorties des classificateurs 6 pour retourner la valeur de sortie 19 comme expliqué plus haut. Pour cela, l'unificateur 8 réalise une pondération des sorties. Les valeurs de pondération sont dans l'exemple décrit ici déterminées de manière empirique. En variante, l'unificateur 8 pourrait réaliser une moyenne arithmétique, ou être un réseau de neurone spécialisé dans la réconciliation des sorties des classificateurs 6.

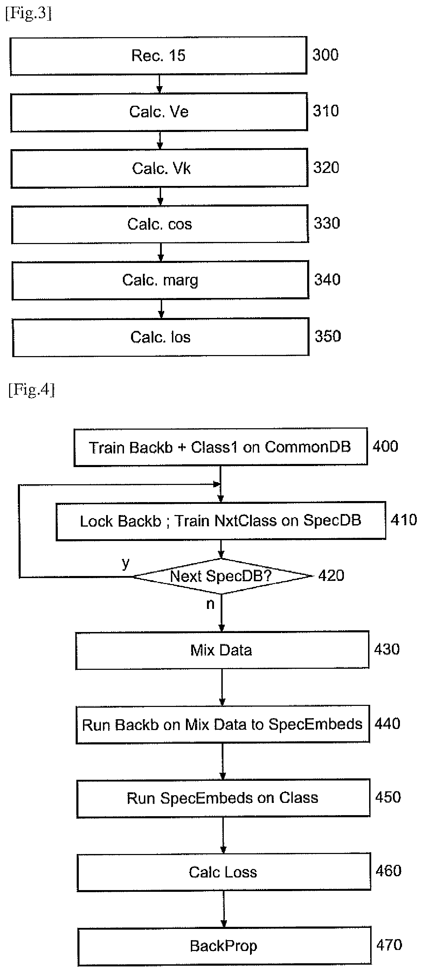

Pendant l'entraînement, l'unificateur 8 est utilisé pendant une opération spéciale pour réaliser une rétropropagation comme cela sera décrit plus bas. En variante, la rétropropagation pourrait être réalisé par un élément distinct de l'unificateur 8. Plus précisément, pendant l'entraînement, l'unificateur 8 pondère les résultats des fonctions de coût de chacun des classificateurs 6 pour réaliser une rétropropagation, comme décrit avec la figure 4. Les valeurs de pondérations sont dans l'exemple décrit ici déterminées de manière empirique. En variante, l'unificateur 8 pourrait réaliser une moyenne arithmétique, ou être un réseau de neurone spécialisé dans la réconciliation des fonctions de coût des classificateurs 6.

L'extracteur 4, les classificateurs 6 et l'unificateur 8 accèdent directement ou indirectement à la mémoire 10. Ils peuvent être réalisés sous la forme d'un code informatique approprié exécuté sur un ou plusieurs processeurs. Par processeurs, il doit être compris tout processeur adapté aux calculs décrits plus bas. Un tel processeur peut être réalisé de toute manière connue, sous la forme d'un microprocesseur pour ordinateur personnel, d'une puce dédiée de type FPGA ou SoC, d'une ressource de calcul sur une grille ou dans le cloud, d'une grappe de processeurs graphiques (GPUs), d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée. Bien évidemment, des processeurs dédiés à l'apprentissage automatique pourront aussi être envisagés.

La figure 2 représente un exemple de mise en œuvre de l'extracteur 4.

Comme expliqué plus haut, l'extracteur 4 est dans l'exemple décrit ici un réseau de neurones profond du type ResNet-101. Les modèles ResNet ont été développés pour résoudre le problème de l'évanouissement du gradient (« gradient vanishing » en anglais) qui est d'autant plus aigu dans les réseaux de neurones profonds que ceux-ci présentent une profondeur importante.

Pour cela, le modèle RestNet a introduit la notion de bloc d'apprentissage résiduel. Ainsi, comme on peut le voir sur la figure 2, l'extracteur 4 comprend une pluralité de blocs d'apprentissage 210, 220, 230 dans lequel le gradient se propage, et, entre un bloc d'apprentissage amont et un bloc d'apprentissage aval consécutifs, le gradient 200 à l'entrée du bloc d'apprentissage amont est ajouté à la sortie du bloc d'apprentissage amont pour former l'entrée du bloc d'apprentissage aval. C'est ce qui est symbolisé par les flèches sur la figure 2. Cette transmission du gradient permet à la rétropropagation des gradients d'être stable et réduit grandement le risque d'évanouissement du gradient.

Ainsi, le bloc d'apprentissage 210 comprend deux couches de convolution 212 et 214, le bloc d'apprentissage 220 comprend deux couches de convolution 222 et 224, et le bloc d'apprentissage 230 comprend deux couches de convolution 232 et 234. Le gradient en sortie du bloc 210 est ajouté au gradient en sortie du bloc 220 comme entrée du bloc suivant, etc.

En sortie du dernier bloc d'apprentissage (ici 230), une couche entièrement connectée 240 (« fully connected layer » en anglais)
Le tableau ci-dessous représente les compositions de divers modèles RestNet, y inclus le modèle ResNet 101 de l'extracteur 4 reçoit en entrée la sortie du bloc 230 ainsi que son gradient en entrée, et retourne le résultat dans une couche de sortie 250. Ici, la couche de sortie 250 contient le jeu de caractéristiques 15.

**[Tableau 1]**

| Couche | Dimension de la sortie | RestNet18 | RestNet34 | RestNet50 | RestNet101 | RestNet151 |
|---|---|---|---|---|---|---|
| Conv1 | 112x112 | 7x7, 64 / 3x3 Max Pool | | | | |
| Conv2 | 56x56 | $\left[\begin{matrix}3 \times 3 , 64 \\ 3 \times 3 , 64\end{matrix}\right] \times 2$ | $\left[\begin{matrix}3 \times 3 , 64 \\ 3 \times 3 , 64\end{matrix}\right] \times 2$ | $\left[\begin{matrix}1 x 1 , 64 \\ 3 x 3 , 64 \\ 1 x 1 , 256\end{matrix}\right] x 3$ | $\left[\begin{matrix}1 x 1 , 64 \\ 3 x 3 , 64 \\ 1 x 1 , 256\end{matrix}\right] x 3$ | $\left[\begin{matrix}1 x 1 , 64 \\ 3 x 3 , 64 \\ 1 x 1 , 256\end{matrix}\right] x 3$ |
| Conv3 | 28x28 | $\left[\begin{matrix}3 \times 3 , 128 \\ 3 \times 3 , 128\end{matrix}\right] \times 2$ | $\left[\begin{matrix}3 \times 3 , 128 \\ 3 \times 3 , 128\end{matrix}\right] \times 2$ | $\left[\begin{matrix}1 x 1 , 128 \\ 3 x 3 , 128 \\ 1 x 1 , 512\end{matrix}\right] x 4$ | $\left[\begin{matrix}1 x 1 , 128 \\ 3 x 3 , 128 \\ 1 x 1 , 512\end{matrix}\right] x 4$ | $\left[\begin{matrix}1 x 1 , 128 \\ 3 x 3 , 128 \\ 1 x 1 , 512\end{matrix}\right] x 8$ |
| Conv4 | | $\left[\begin{matrix}3 \times 3 , 64 \\ 3 \times 3 , 64\end{matrix}\right] \times 2$ | $\left[\begin{matrix}3 \times 3 , 256 \\ 3 \times 3 , 256\end{matrix}\right] \times 4$ | $\left[\begin{matrix}1 x 1 , 256 \\ 3 x 3 , 256 \\ 1 x 1 , 1024\end{matrix}\right] x 6$ | $\left[\begin{matrix}1 x 1 , 256 \\ 3 x 3 , 256 \\ 1 x 1 , 1024\end{matrix}\right] x 23$ | $\left[\begin{matrix}1 x 1 , 256 \\ 3 x 3 , 256 \\ 1 x 1 , 1024\end{matrix}\right] x 36$ |
| Conv5 | | $\left[\begin{matrix}3 \times 3 , 64 \\ 3 \times 3 , 64\end{matrix}\right] \times 2$ | $\left[\begin{matrix}3 \times 3 , 5 \\ 3 \times 3 , 64\end{matrix}\right] \times 6$ | $\left[\begin{matrix}1 x 1 , 512 \\ 3 x 3 , 512 \\ 1 x 1 , 2048\end{matrix}\right] x 3$ | $\left[\begin{matrix}1 x 1 , 512 \\ 3 x 3 , 512 \\ 1 x 1 , 2048\end{matrix}\right] x 3$ | $\left[\begin{matrix}1 x 1 , 512 \\ 3 x 3 , 512 \\ 1 x 1 , 2048\end{matrix}\right] x 3$ |
| Sortie | 1x1 | Avg. Pool, Couche entièrement connectée x1000, softmax | | | | |

Il y a ainsi 5 types de blocs d'apprentissage, et au sein d'un type de bloc, des couches de convolutions s'enchaînent avec les dimensions indiquées dans le tableau 1, dans lequel « 3x3 » indique la taille du noyau de convolution, et « 64 » indique la profondeur, etc.

Plus il y a de blocs d'apprentissage, et plus l'extracteur 4 est puissant, et plus la puissance nécessaire pour l'entraîner est importante.

Bien que le modèle ResNet 101 ait donné les meilleurs résultats dans les recherches de la Demanderesse, d'autres modèles pourront être retenus, comme expliqué plus haut.

La figure 3 représente un exemple de mise en œuvre d'un classificateur 6.

Le classificateur 6 sert à identifier des visages dans l'exemple décrit ici. Un bon modèle de comparaison de visages peut donner à deux échantillons correspondants un score de similarité élevé, alors que la similarité est faible pour deux échantillons non correspondants.

Dans l'exemple décrit ici, le classificateur 6 est du type Arcface. Le développement d'Arcface a été une étape très importante pour la comparaison de visages.

Avant Arcface, il existait deux approches principales pour former un modèle de comparaison de visages.

La première approche est appelée perte de triplets. Trois images forment le triplet dans les données d'entrée et sont respectivement nommées ancre, positif et négatif. L'objectif de l'entraînement est de maximiser la différence entre la similarité entre l'ancre et l'échantillon positif et la similarité entre l'ancre et l'échantillon négatif. Cependant, il est très compliqué de générer ces trois images pour l'entraînement, et un mauvais échantillonnage des trois images ne peut pas aider à former un bon modèle.

La deuxième approche consiste à entraîner un modèle de comparaison de visages via une tâche d'entraînement de classification avec une perte de type « CrossEntropyLoss ».

Cependant, la tâche d'entraînement de classification ne peut pas générer un modèle avec une grande capacité de généralisation. En d'autres termes, le modèle peut avoir une très bonne performance pendant l'entraînement, mais une mauvaise performance dans les données de test.

ArcFace a été conçu pour résoudre le problème de la généralisation. En introduisant le concept de marge angulaire, le modèle est entraîné pour avoir une marge élevée entre les classes. En d'autres termes, la similarité entre les échantillons de la même classe est faible et la similarité entre les échantillons de classes différentes est élevée.

Pour cela, ArcFace réalise les opérations représentées sur la figure 3.

Dans une opération 300, le classificateur 6 reçoit le jeu de caractéristiques 15 en sortie de l'extracteur 4. Ensuite, dans une opération 310, le jeu de caractéristiques 15 est normalisé en un vecteur Ve, puis dans une opération 320, le noyau est normalisé dans une couche entièrement connectée en un vecteur Vk. Une opération 330 est alors exécutée pour calculer cos(B)=Ve x Vk, puis une marge est ajoutée dans une opération 340 pour obtenir cos(ϑ+marge). Enfin, la fonction de perte est calculée dans une opération 350 selon la formule $- \frac{1}{N} {\sum }_{i = 1}^{N} \frac{{e}^{s \left(cos\left({ϑ}_{yi}+m\right)\right)}}{{e}^{s \left(cos\left({ϑ}_{yi}+m\right)\right)} + {\sum }_{j = 1 , j \neq yi}^{n} {e}^{s \left(cos\left({ϑ}_{j}\right)\right)}}$

Dans cette formule, N est le nombre d'échantillons, s est une valeur de gain choisie pour stabiliser la perte de rétropropagation, yi est l'index de verité, *ϑ_{yi}* est l'angle entre le vecteur Ve et le vecteur de centre de classe Vyi, *ϑⱼ* est l'angle entre le vecteur Ve et le vecteur de centre de classe Vj, m est la marge angulaire et n est le nombre de caractéristiques.

En variante, les classificateurs 6 pourraient être autres que basés sur ArcFace et être des réseaux de neurones de l'état de l'art de la détection des visages.

La figure 4 représente un exemple de mise en œuvre de l'entraînement du dispositif 2 lui permettant d'obtenir des capacités généralistes et spécialisées.

L'idée générale est de d'abord entraîner la partie généraliste du dispositif 2, puis séparément chaque classificateur spécialisé, puis enfin de régler finement l'ensemble par rétropropagation.

Ainsi, dans une opération 400, l'extracteur 4 est entraîné ensemble avec le classificateur 6 à vocation généraliste sur la base de données 12 à vocation généraliste. Cette base de données et le classificateur pourront également être qualifiés de communs, car ils représentent un savoir commun, par opposition aux bases de données et classificateurs spécifiques.

Le résultat de cet entraînement est un extracteur 4 présentant une qualité d'analyse des images et qui produit des jeux de caractéristiques bien adapté aux images communes. Le classificateur commun est également dans un état d'entraînement satisfaisant.

Ensuite, les classificateurs spécifiques vont être entraînés dans une boucle. Pour cela, l'extracteur 4 est figé, afin que l'entraînement des classificateurs spécifiques ne vienne pas surentraîner celui-ci, et l'entraînement des classificateurs spécifiques est réalisé dans une opération 410. Cet entraînement est réalisé en utilisant une des bases de données spécifiques. Ensuite, dans une opération 420, il est vérifié s'il reste une base de données spécifiques n'ayant pas encore servi à entraîner un classificateur. Si c'est le cas, alors l'opération 410 est répétée. Sinon, la boucle est finie, et tous les classificateurs spécifiques ont été entraînés, chacun avec une base de données spécifique. En variante, les opérations 410 pourraient être réalisées en parallèle, puisque l'extracteur 4 est figé.

Une fois cette boucle terminée, le dispositif 2 comprend donc un extracteur 4 qui a été entraîné avec une base de données généraliste pour réaliser l'extraction de jeux de caractéristiques des images et un classificateur 6 généraliste, et un classificateur 6 spécifique qui a été entraîné avec une base de données spécifique.

Les opérations suivantes ont pour fonction de spécialiser le dispositif 2 afin de marier les forces généralistes et spécifiques.

Pour cela, dans une opération 430, un jeu de données d'entraînement global est généré à partir des bases de données 12. Cette génération est réalisée en préservant l'identification de la base de données 12 d'origine de chaque image.

Ensuite, dans une opération 440, l'extracteur 4 est débloqué afin de pouvoir réaliser un nouvel entraînement, et le jeu de données d'entraînement global est fourni à l'extracteur 4 afin d'y déterminer les jeux de caractéristiques des images qu'il contient.

Ces jeux de caractéristiques sont alors envoyés à chaque classificateur 6, chacun en fonction de la base de données 12 dont est tirée l'image correspondante. Ainsi, si une image du jeu de données d'entraînement global est tirée de la base de données généraliste, alors son jeu de caractéristiques sera envoyé au classificateur commun, et si elle est tirée de la base de données spécifique, alors son jeu de caractéristiques sera envoyé au classificateur spécifique. En cas de plusieurs bases de données spécifiques, le jeu de caractéristique sera envoyé à chaque classificateur spécifique particulier selon la base de données d'origine.

Chaque classificateur 6 détermine alors pour chaque jeu de caractéristiques le concernant une valeur de réponse 17 dans une opération 450, puis dans une opération 460, une fonction de perte est exécutée pour déterminer, pour chaque classificateur 6, une valeur de perte des valeurs de réponse 17 qu'il a produites. Cette fonction de perte peut être identique pour tous les classificateurs, ou être distincte.

Enfin, dans une opération 470, les valeurs issues de la fonction de perte des classificateurs sont pondérées par l'unificateur 8 et utilisées pour réaliser une rétropropagation qui est réintroduite dans l'extracteur 4.

Le dispositif 2 ainsi entraîné a été utilisé sur la base de données CALFW mentionnée plus haut. Pour évaluer sa performance, il a été comparé sur cette même base de données à un modèle utilisant exclusivement les réseaux de neurones ArcFace conformément à l'article mentionné plus haut.

Les résultats obtenus indiquent que le taux de précision du réseau de neurones conventionnel est de 95,4% (soit 4,6% d'erreur), alors que le dispositif 2 offre un taux de précision de 96,1% (soit 3,9% d'erreur). Cette amélioration est considérable et démontre l'intérêt du dispositif 2.

## Revendications

1. Dispositif de traitement de données d'images de visages d'êtres humains comprenant un extracteur (4) agencé pour recevoir des données d'image (13) et pour en extraire un jeu de caractéristiques (15), et deux ou plus de deux classificateurs (6) agencés pour recevoir un jeu de caractéristiques (15) de l'extracteur (4) et pour retourner une valeur de classification ou de labellisation (17) des données d'image (13) correspondantes, dans lequel l'extracteur (4) est un réseau de neurones profond et les deux ou plus de deux classificateurs (6) comprennent un unique réseau de neurones commun et un ou des réseaux de neurones spécifiques à des sous-ensembles d'images de visages d'êtres humains, les sous-ensembles d'images de visages d'êtres humains comprenant au moins un sous-ensemble commun d'images de visages d'êtres humains, et un ou plusieurs sous-ensembles spécifiques d'images de visages d'êtres humains tels que les données d'images de visages d'êtres humains d'un sous-ensemble spécifique d'images de visages d'êtres humains présentent individuellement ou ensemble une caractéristique d'être humain commune et tels que deux sous-ensembles spécifiques distincts ne présentent pas un nombre d'images identiques supérieur à 50%, et le sous-ensemble commun comprenant un nombre d'images au moins 100 fois supérieur aux nombres d'images des sous-ensembles spécifiques, l'entraînement de l'extracteur (4) et des deux ou plus de deux classificateurs (6) est réalisé : a) en entraînant l'extracteur (4) et un premier des classificateurs (6) ensemble en utilisant le sous-ensemble commun d'images de visages d'êtres humains, b) en bloquant l'entraînement de l'extracteur (4) et en entraînant un autre classificateur (6) avec un premier sous-ensemble spécifique, c) en répétant l'opération b) à chaque fois avec un autre classificateur (6) et avec un sous-ensemble spécifique distinct, jusqu'à ce que tous les sous-ensembles spécifiques distincts aient être utilisés pour entraîner un classificateur (6), d) en réalisant une opération d'entraînement avec rétropropagation comprenant d1) définir un jeu de données mixte comprenant des données d'images issues du sous-ensemble commun et de chacun des sous-ensembles spécifiques, d2) exécuter l'extracteur (4) avec le jeu de données mixte, et classer les jeux de caractéristiques résultants en sous-ensembles de jeux de caractéristique selon le sous-ensemble dont sont issues les données d'images dans le jeu de données mixte, d3) exécuter chaque classificateur (6) avec le sous-ensemble de jeux de caractéristiques correspondant au sous-ensemble qui a servi à l'entraînement de ce classificateur (6) à l'opération a), b) ou c), d4) calculer pour chaque classificateur (6) une valeur de perte à partir des valeur de classification ou de labellisation (15) issues de l'opérateur d3), et d5) réaliser rétropropagation à partir d'une moyenne pondérée des valeurs de perte de l'opération d4).

2. Dispositif selon la revendication 1, dans lequel l'extracteur (4) est un réseau de neurones profond adapté à l'extraction de caractéristiques d'images, comme un réseau de la famille ResNet, ou un réseau de la famille DenseNet, MobileNet, ResNeXt.

3. Dispositif selon la revendication 2, dans lequel l'extracteur (4) est un réseau de neurones profond ResNet-101.

4. Dispositif selon l'une des revendications précédentes, dans lequel les classificateurs (6) sont du type ArcFace.

5. Dispositif selon l'une des revendications précédentes, comprenant un sous-ensemble spécifique d'images de visages d'êtres humains présentant une grande variété d'âges.

6. Dispositif selon l'une des revendications précédentes, comprenant un sous-ensemble spécifique d'images de visages d'êtres humains présentant une grande variété de maquillages.

7. Procédé d'entraînement d'un dispositif de traitement de données d'images de visages d'êtres humains comprenant un extracteur (4) agencé pour recevoir des données d'image (13) et pour en extraire un jeu de caractéristiques (15), et deux ou plus de deux classificateurs (6) agencés pour recevoir un jeu de caractéristiques (15) de l'extracteur (4) et pour retourner une valeur de classification ou de labellisation (17) des données d'image (13) correspondantes, dans lequel l'extracteur (4) est un réseau de neurones profond et les deux ou plus de deux classificateurs (6) comprennent un unique réseau de neurones commun et un ou des réseaux de neurones spécifiques à des sous-ensembles d'images de visages d'êtres humains, les sous-ensembles d'images de visages d'êtres humains comprenant au moins un sous-ensemble commun d'images de visages d'êtres humains, et un ou plusieurs sous-ensembles spécifiques d'images de visages d'êtres humains tels que les données d'images de visages d'êtres humains d'un sous-ensemble spécifique d'images de visages d'êtres humains présentent individuellement ou ensemble une caractéristique d'être humain commune et tels que deux sous-ensembles spécifiques distincts ne présentent pas un nombre d'images identiques supérieur à 50%, et le sous-ensemble commun comprenant un nombre d'images au moins 100 fois supérieur aux nombres d'images des sous-ensembles spécifiques, dans lequel l'entraînement de l'extracteur (4) et des deux ou plus de deux classificateurs (6) est réalisé : a) en entraînant l'extracteur (4) et un premier des classificateurs (6) ensemble en utilisant le sous-ensemble commun d'images de visages d'êtres humains, b) en bloquant l'entraînement de l'extracteur (4) et en entraînant un autre classificateur (6) avec un premier sous-ensemble spécifique, c) en répétant l'opération b) à chaque fois avec un autre classificateur (6) et avec un sous-ensemble spécifique distinct, jusqu'à ce que tous les sous-ensembles spécifiques distincts aient être utilisés pour entraîner un classificateur (6), d) en réalisant une opération d'entraînement avec rétropropagation comprenant d1) définir un jeu de données mixte comprenant des données d'images issues du sous-ensemble commun et de chacun des sous-ensembles spécifiques, d2) exécuter l'extracteur (4) avec le jeu de données mixte, et classer les jeux de caractéristiques résultants en sous-ensembles de jeux de caractéristique selon le sous-ensemble dont sont issues les données d'images dans le jeu de données mixte, d3) exécuter chaque classificateur (6) avec le sous-ensemble de jeux de caractéristiques correspondant au sous-ensemble qui a servi à l'entraînement de ce classificateur (6) à l'opération a), b) ou c), d4) calculer pour chaque classificateur (6) une valeur de perte à partir des valeur de classification ou de labellisation (15) issues de l'opérateur d3), et d5) réaliser rétropropagation à partir d'une moyenne pondérée des valeurs de perte de l'opération d4).

## Patentansprüche

1. Vorrichtung zur Verarbeitung von Bilddaten von Gesichtern von Menschen, umfassend einen Extraktor (4), der so angeordnet ist, dass er Bilddaten (13) empfängt und einen Satz von Merkmalen (15) daraus extrahiert, und zwei oder mehr Klassifikatoren (6), die so angeordnet sind, dass sie einen Satz von Merkmalen (15) von dem Extraktor (4) empfangen und einen Klassifizierungs- oder Kennzeichnungswert (17) der entsprechenden Bilddaten (13) zurückgeben, wobei der Extraktor (4) ein tiefes neuronales Netzwerk ist und die zwei oder mehr als zwei Klassifikatoren (6) ein einziges gemeinsames neuronales Netzwerk und ein oder mehrere neuronale Netzwerke umfassen, die spezifisch für Untergruppen von Gesichtsbildern von Menschen sind, wobei die Untergruppen von Gesichtsbildern von Menschen mindestens eine gemeinsame Untergruppe von Gesichtsbildern von Menschen sowie eine oder mehrere spezifische Untergruppen von Gesichtsbildern von Menschen umfassen, wobei die Bilddaten von Gesichtsbildern von Menschen einer spezifischen Untergruppe von Gesichtsbildern von Menschen einzeln oder gemeinsam ein gemeinsames menschliches Merkmal aufweisen und bei denen zwei separate spezifische Untergruppen nicht mehr als 50 % identische Bilder aufweisen, und wobei die gemeinsame Untergruppe eine Anzahl von Bildern umfasst, die mindestens das 100-Fache der Anzahl der Bilder der spezifischen Untergruppen beträgt, wobei das Trainieren des Extraktors (4) und der zwei oder mehr Klassifikatoren (6) wie folgt durchgeführt wird:
a) durch gemeinsames Trainieren des Extraktors (4) und eines ersten der Klassifikatoren (6) unter Verwendung der gemeinsamen Untergruppe von Gesichtsbildern von Menschen,
b) durch Blockieren des Trainierens des Extraktors (4) und durch Trainieren eines anderen Klassifikators (6) mit einer ersten spezifischen Untergruppe,
c) durch Wiederholen des Vorgangs b) jedes Mal mit einem anderen Klassifikator (6) und mit einer separaten spezifischen Untergruppe, bis alle separaten spezifischen Untergruppen zum Trainieren eines Klassifikators (6) verwendet worden sind,
d) durch Durchführen eines Trainingsvorgangs mit Rückwärtspropagation, umfassend
d1) Definieren eines gemischten Datensatzes, der Bilddaten aus der gemeinsamen Untergruppe und aus jeder der spezifischen Untergruppen umfasst,
d2) Ausführen des Extraktors (4) mit dem gemischten Datensatz und Klassifizieren der resultierenden Merkmalssätze in Untergruppen von Merkmalssätzen entsprechen der Untergruppe, aus der die Bilddaten in dem gemischten Datensatz stammen,
d3) Ausführen jedes Klassifikators (6) mit der Untergruppe von Merkmalssätzen, die der Untergruppe entsprechen, die zum Trainieren dieses Klassifikators (6) für den Vorgang a), b) oder c) verwendet wurde,
d4) Berechnen eines Verlustwerts ausgehend von den Klassifizierungs- oder Kennzeichnungswerten (15), die aus dem Vorgang d3) stammen, für jeden Klassifikator (6), und
d5) Durchführen einer Rückwärtspropagation ausgehend von einem gewichteten Durchschnitt der Verlustwerte des Vorgangs d4).

2. Vorrichtung nach Anspruch 1, wobei der Extraktor (4) ein tiefes neuronales Netzwerk ist, das für die Extraktion von Bildmerkmalen geeignet ist, wie ein Netzwerk der Familie ResNet oder ein Netzwerk der Familie DenseNet, MobileNet, ResNeXt.

3. Vorrichtung nach Anspruch 2, wobei der Extraktor (4) ein tiefes neuronales Netzwerk vom Typ ResNet-101 ist.

4. Vorrichtung nach einem der vorhergehenden Ansprüche, wobei die Klassifikatoren (6) vom Typ ArcFace sind.

5. Vorrichtung nach einem der vorhergehenden Ansprüche, umfassend eine spezifische Untergruppe von Gesichtsbildern von Menschen, die eine große Vielfalt an Altersgruppen aufweisen.

6. Vorrichtung nach einem der vorhergehenden Ansprüche, umfassend eine spezifische Untergruppe von Gesichtsbildern von Menschen, die eine große Vielfalt an Make-up-Varianten aufweisen.

7. Verfahren zum Trainieren einer Vorrichtung zur Verarbeitung von Bilddaten von Gesichtern von Menschen, umfassend einen Extraktor (4), der so angeordnet ist, dass er Bilddaten (13) empfängt und einen Satz von Merkmalen (15) daraus extrahiert, und zwei oder mehr Klassifikatoren (6), die so angeordnet sind, dass sie einen Satz von Merkmalen (15) von dem Extraktor (4) empfangen und einen Klassifizierungs- oder Kennzeichnungswert (17) der entsprechenden Bilddaten (13) zurückgeben, wobei der Extraktor (4) ein tiefes neuronales Netzwerk ist und die zwei oder mehr als zwei Klassifikatoren (6) ein einziges gemeinsames neuronales Netzwerk und ein oder mehrere neuronale Netzwerke umfassen, die spezifisch für Untergruppen von Gesichtsbildern von Menschen sind, wobei die Untergruppen von Gesichtsbildern von Menschen mindestens eine gemeinsame Untergruppe von Gesichtsbildern von Menschen sowie eine oder mehrere spezifische Untergruppen von Gesichtsbildern von Menschen umfassen, wobei die Bilddaten von Gesichtsbildern von Menschen einer spezifischen Untergruppe von Gesichtsbildern von Menschen einzeln oder gemeinsam ein gemeinsames menschliches Merkmal aufweisen und bei denen zwei separate spezifische Untergruppen nicht mehr als 50 % identische Bilder aufweisen, und wobei die gemeinsame Untergruppe eine Anzahl von Bildern umfasst, die mindestens das 100-Fache der Anzahl der Bilder der spezifischen Untergruppen beträgt, wobei das Trainieren des Extraktors (4) und der zwei oder mehr Klassifikatoren (6) wie folgt durchgeführt wird:
a) durch gemeinsames Trainieren des Extraktors (4) und eines ersten der Klassifikatoren (6) unter Verwendung der gemeinsamen Untergruppe von Gesichtsbildern von Menschen,
b) durch Blockieren des Trainierens des Extraktors (4) und durch Trainieren eines anderen Klassifikators (6) mit einer ersten spezifischen Untergruppe,
c) durch Wiederholen des Vorgangs b) jedes Mal mit einem anderen Klassifikator (6) und mit einer separaten spezifischen Untergruppe, bis alle separaten spezifischen Untergruppen zum Trainieren eines Klassifikators (6) verwendet worden sind,
d) durch Durchführen eines Trainingsvorgangs mit Rückwärtspropagation, umfassend
d1) Definieren eines gemischten Datensatzes, der Bilddaten aus der gemeinsamen Untergruppe und aus jeder der spezifischen Untergruppen umfasst,
d2) Ausführen des Extraktors (4) mit dem gemischten Datensatz und Klassifizieren der resultierenden Merkmalssätze in Untergruppen von Merkmalssätzen entsprechen der Untergruppe, aus der die Bilddaten in dem gemischten Datensatz stammen,
d3) Ausführen jedes Klassifikators (6) mit der Untergruppe von Merkmalssätzen, die der Untergruppe entsprechen, die zum Trainieren dieses Klassifikators (6) für den Vorgang a), b) oder c) verwendet wurde,
d4) Berechnen eines Verlustwerts ausgehend von den Klassifizierungs- oder Kennzeichnungswerten (15), die aus dem Vorgang d3) stammen, für jeden Klassifikator (6), und
d5) Durchführen einer Rückwärtspropagation ausgehend von einem gewichteten Durchschnitt der Verlustwerte des Vorgangs d4).

## Claims

1. A device for processing human face image data, comprising an extractor (4) arranged to receive image data (13) and to extract a set of features (15) therefrom, and two or more classifiers (6) arranged to receive a set of features (15) from the extractor (4) and to return a classification or labelling value (17) of the corresponding image data (13), wherein the extractor (4) is a deep neural network and the two or more classifiers (6) comprise a single common neural network and one or more neural network(s) specific to subsets of human face images, the subsets of human face images comprising at least one common subset of human face images, and one or more specific subset(s) of human face images such that the human face image data of a specific subset of human face images exhibit, individually or collectively, a common human feature, and such that no two separate specific subsets contain more than 50% of identical images, and the common subset comprises a number of images at least 100 times greater than the number of images in the specific subsets, the training of the extractor (4) and of the two or more classifiers (6) is carried out:
a) by training the extractor (4) and a first one of the classifiers (6) together using the common subset of human face images,
b) by blocking the training of the extractor (4) and training another classifier (6) with a specific first subset,
c) repeating operation b) each time with another classifier (6) and with a separate specific subset, until all of the separate specific subsets have been used to train a classifier (6),
d) by carrying out a backpropagation training operation comprising
d1) defining a mixed data set comprising image data derived from the common subset and each of the specific subsets,
d2) executing the extractor (4) with the mixed data set, and classifying the resulting feature sets into subsets of feature sets according to the subset from which the image data in the mixed data set are derived,
d3) executing each classifier (6) with the subset of feature sets corresponding to the subset that has been used to train this classifier (6) in operation a), b) or c),
d4) calculating for each classifier (6) a loss value from the classification or labelling values (15) derived from the operator d3), and
d5) carrying out backpropagation using a weighted average of the loss values of operation d4).

2. The device according to claim 1, wherein the extractor (4) is a deep neural network suitable for extracting image features, such as a network of the ResNet family, or a network of the DenseNet, MobileNet, ResNeXt family.

3. The device according to claim 2, wherein the extractor (4) is a ResNet-101 deep neural network.

4. The device according to one of the preceding claims, wherein the classifiers (6) are of the ArcFace type.

5. The device according to one of the preceding claims, comprising a specific subset of images of faces of human beings having a wide variety of ages.

6. The device according to one of the preceding claims, comprising a specific subset of images of human faces displaying a wide variety of makeup styles.

7. A method for training a device for processing human face image data comprising an extractor (4) arranged to receive image data (13) and to extract a set of features (15) therefrom, and two or more classifiers (6) arranged to receive a set of features (15) from the extractor (4) and to return a classification or labelling value (17) of the corresponding image data (13), wherein the extractor (4) is a deep neural network and the two or more classifiers (6) comprise a single common neural network and one or more neural network(s) specific to subsets of human face images, the subsets of human face images comprising at least one common subset of human face images, and one or more specific subset(s) of human face images such that the human face image data of a specific subset of human face images exhibit, individually or collectively, a common human feature, and such that no two separate specific subsets contain more than 50% of identical images, and the common subset comprises a number of images at least 100 times greater than the number of images of the specific subsets, wherein the training of the extractor (4) and the two or more classifiers (6) is carried out:
a) by training the extractor (4) and a first one of the classifiers (6) together using the common subset of human face images,
b) by blocking the training of the extractor (4) and training another classifier (6) with a specific first subset,
c) repeating operation b) each time with another classifier (6) and with a separate specific subset, until all of the separate specific subsets have been used to train a classifier (6),
d) by carrying out a backpropagation training operation comprising
d1) defining a mixed data set comprising image data derived from the common subset and each of the specific subsets,
d2) executing the extractor (4) with the mixed data set, and classifying the resulting feature sets into subsets of feature sets according to the subset from which the image data in the mixed data set are derived,
d3) executing each classifier (6) with the subset of feature sets corresponding to the subset that has been used to train this classifier (6) in operation a), b) or c),
d4) calculating for each classifier (6) a loss value from the classification or labelling values (15) derived from the operator d3), and
d5) carrying out backpropagation using a weighted average of the loss values of operation d4).
